# EUROPEAN PATENT APPLICATION

(11) **EP 2 924 385 A1**
(43) Date of publication of application: **30.09.2015**
(21) Application number: 13895806.1
(22) Date of filing: 14.11.2013
(51) Int. Cl.: F28F 3/06, F28D 7/16

(54) **HEAT EXCHANGER FOR AIRCRAFT**

(60) Divisional application: 15166650.0
(71) Applicant: Sumitomo Precision Products Co., Ltd., Amagasaki-shi, Hyogo 660-0891 (JP)
(72) Inventor: AOKI, Taku, Amagasaki-shi Hyogo 660-0891 (JP)
(74) Representative: BRP Renaud & Partner mbB Rechtsanwälte Patentanwälte Steuerberater
(86) International application number: PCT/JP2013/006705
(87) International publication number: WO 2015/071933

(57) **Abstract**

This aircraft heat exchanger includes a heat exchanger body, which includes: a temperature raising section configured at least to raise a temperature of the heat exchanger body locally; and a heat exchanging section configured to exchange heat between an aircraft fuel and oil. The temperature raising section has an inlet for the oil, and has its temperature raised by the oil that has entered the heat exchanger body through the inlet. The heat exchanging section has an outlet for the aircraft fuel. The oil that has passed through the temperature raising section is introduced into the heat exchanging section from around the outlet for the aircraft fuel. The heat exchanging section is configured to have counter flows.

## Description

### TECHNICAL FIELD

The present disclosure relates to a heat exchanger for use in aircrafts, and more particularly relates to a heat exchanger which is mounted on an aircraft to exchange heat between a fuel for the aircraft and some kind of oil.

### BACKGROUND ART

Patent Document 1 discloses a plate fin heat exchanger to be mounted on an aircraft. This heat exchanger exchanges heat between a fuel for the aircraft (hereinafter simply referred to as "fuel") and some kind of oil such as a lubricant for either an engine or a power generator to be driven by the engine (such lubricants will be hereinafter collectively referred to as "oil"). In such a plate fin heat exchanger, each of flow channels provided for the fuel and oil is implemented as a U-turn flow channel, of which the forward and backward paths are separated from each other via a partition. Also, the heat exchanger has a "parallel flow" configuration in which the flow directions of the fuel and oil are parallel to each other by providing respective inlets for the fuel and oil at the same position.

Patent Document 2, as well as Patent Document 1, discloses a plate fin heat exchanger to be mounted on an aircraft. In this heat exchanger, the flow channels for the fuel and oil are also implemented as U-turn flow channels, but the fuel inlet is provided at the same position as the oil outlet. Thus, unlike the heat exchanger of Patent Document 1, the heat exchanger of Patent Document 2 has a "counter flow" configuration in which the flow direction of the fuel is opposite from that of the oil. The counter flow heat exchanger achieves a higher exchange efficiency than the parallel flow heat exchanger, thus contributing more effectively to reducing the size and weight of the heat exchanger.

Meanwhile, Patent Document 3 discloses a shell-and-tube heat exchanger as an aircraft heat exchanger which exchanges heat between fuel and oil.

### CITATION LIST

### PATENT DOCUMENT

PATENT DOCUMENT 1: Japanese Unexamined Patent Publication No. 2000-97582
PATENT DOCUMENT 2: Japanese Unexamined Patent Publication No. 2011-153752
PATENT DOCUMENT 3: PCT International Application Japanese National Phase Publication No. 2002-525552

### SUMMARY OF INVENTION

### TECHNICAL PROBLEM

In the plate fin heat exchanger, for example, the flow channel to make the fuel flow through may be comprised of a set of gaps between fins with a small cross section so that those gaps are defined by corrugated fins. In such a configuration, when the fuel flowing enters those gaps between the fins, the flow velocity or pressure of the fuel varies more significantly. Likewise, in the shell-and-tube heat exchanger, the flow channel to make the fuel flow through is also comprised of a set of tubes with a small cross section. For that reason, just like the plate fin heat exchanger, when the fuel flowing enters those tubes, the flow velocity or pressure of the fuel varies more significantly, too.

On the other hand, in an aircraft heat exchanger, the temperature of the fuel may become so low as to get water in the fuel supercooled in various operating environments (e.g., when the aircraft is flying). The present inventors discovered via experiments that especially when the temperature of an aircraft fuel fell within a particular temperature range, a variation in the flow velocity or pressure of the fuel would often cause the supercooled water to make a phase transition and freeze. Once any constituent member of the heat exchanger has been partially covered with ice due to freezing of the water, the water in the fuel will start freezing one after another from there, thus eventually depositing thick ice on the fuel. If ice were deposited in the vicinity of the fuel inlets formed by corrugated fins or tubes, the deposited ice would block the fuel inlets.

In view of these considerations, the present disclosure provides a technique for preventing, in an aircraft heat exchanger which exchanges heat between an aircraft fuel and oil, the water in the fuel from making a phase transition and freezing and for preventing any constituent member of the heat exchanger from being partially covered with ice.

### SOLUTION TO THE PROBLEM

The present inventors divide the body of a heat exchanger into a temperature raising section which prevents water in an aircraft fuel from freezing and a heat exchanging section which mostly exchanges heat between the aircraft fuel and oil. Thus, the present inventors provide a measure for increasing the heat exchange efficiency by making the temperature raising section heat the heat exchanger body locally to prevent the water in the fuel from freezing or any member from being partially covered with ice, and by making the fuel and the oil flow in mutually opposite directions through the heat exchanging section.

Specifically, the present disclosure relates to an aircraft heat exchanger, which includes a heat exchanger body configured to exchange heat between an aircraft fuel and oil that are passing through the heat exchanger body.

The heat exchanger body includes: a temperature raising section configured at least to raise the temperature of the heat exchanger body locally; and a heat exchanging section configured to exchange heat between the aircraft fuel and the oil. The temperature raising section has inlets for the aircraft fuel and the oil, respectively, and has its temperature raised by the oil that has entered the heat exchanger body through the inlet.

The heat exchanging section has outlets for the aircraft fuel and the oil, and is configured to introduce the oil that has passed through the temperature raising section into the heat exchanging section from around the outlet for the aircraft fuel so that flow directions of the aircraft fuel and the oil become opposite from each other.

According to this configuration, a heat exchanger body which exchanges heat between an aircraft fuel and oil includes a temperature raising section and a heat exchanging section. The temperature raising section is provided to raise the temperature of the heat exchanger body locally and has an inlet for the aircraft fuel. The temperature raising section keeps the temperature of the heat exchanger body raised, thereby preventing supercooled water from freezing even if there arises any variation in the flow velocity or pressure of the fuel that is going to enter the heat exchanger body. Also, even in a situation where the water has frozen anyway, the temperature raising section can still prevent any constituent member of the heat exchanger body from being covered with ice anywhere. By preventing the water in the fuel from freezing and preventing any member of the heat exchanger body from being partially covered with ice in this manner, no ice should be deposited in the temperature raising section. As a result, an unwanted situation where the fuel inlet is blocked with ice can be avoided perfectly.

The temperature raising section has an oil inlet, and therefore, high-temperature oil that has just entered the heat exchanger body heats the temperature raising section locally. Note that the temperature raising section raises the temperature of the heat exchanger body just locally most of the time. The reason is that to prevent the water in the fuel from freezing and prevent any member from being partially covered with ice, it should be more effective to raise the temperature of the heat exchanger body that is in contact with the aircraft fuel rather than raising the temperature of the aircraft fuel itself. Nevertheless, since the temperature raising section does form part of the heat exchanger body, heat exchange can naturally be made between the aircraft fuel and the oil even in this temperature raising section.

The heat exchanging section exchanges heat between, and provides outlets for, the aircraft fuel and the oil. The oil that has passed through the temperature raising section is introduced into the heat exchanging section in the vicinity of the aircraft fuel outlet. This heat exchanging section is configured so that the flow directions of the aircraft fuel and the oil become opposite from each other. Note that the phrase "in the vicinity of the outlet" means that the oil is introduced into a region neighboring the fuel outlet so that the flows of the aircraft fuel and the oil can be opposite from each other in the entire heat exchanging section.

If both of the fuel and oil inlets were provided for the temperature raising section, then the flow directions of the fuel and the oil in the heat exchanger would ordinarily be parallel to each other, as disclosed in Patent Document 1. This would result a decline in the heat exchange efficiency of the heat exchanger.

According to the configuration described above, on the other hand, the inlets for the fuel and the oil are also provided at the same position, but the oil that has passed through the temperature raising section is introduced into the heat exchanging section from the vicinity of the fuel outlet. In the heat exchanging section, the fuel and oil flows can be counter flows, which leads to an increase in the heat exchange efficiency of the heat exchanger.

Consequently, this aircraft heat exchanger can prevent water in the aircraft fuel from freezing or any member thereof from being partially covered with ice, and does increase the heat exchange efficiency between the aircraft fuel and the oil. This contributes effectively to cutting down the size and weight of an aircraft heat exchanger.

The heat exchanger body may have a plate fin structure which is configured by alternately stacking, one upon the other, fuel flow channels to let the aircraft fuel flow through and oil flow channels to let the oil flow through. In at least each of the oil flow channels stacked, a flow channel member may be arranged which defines a flow channel so that the oil flows from the temperature raising section toward the heat exchanging section.

The plate fin heat exchanger body can have a reduced size and weight, and may be used advantageously as an aircraft heat exchanger. This plate fin heat exchanger with such a configuration employs the characteristic configuration including the temperature raising section and the heat exchanging section, and therefore, can not only prevent water in the aircraft fuel from freezing or any member thereof from being partially covered with ice but also increase the heat exchange efficiency between the aircraft fuel and the oil as well. Consequently, the heat exchanger body can have a further reduced size and weight.

In addition, in the plate fin heat exchanger body, the fuel flow channel to let the aircraft fuel flow through and the oil flow channel to let the oil flow through are provided independently of each other for respectively different layers of the same stack, and therefore, their flow directions can be defined independently of each other. According to the configuration described above, by providing a flow channel member for at least each layer of the oil flow channels stacked, the oil can flow from the temperature raising section toward the heat exchanging section in the same direction as the flow direction of the fuel flow channel in that layer.

In the plate fin heat exchanger body, each of the fuel flow channels stacked may be implemented as a U-turn flow channel including a forward path and a backward path. The fuel flow channel inlet provided for the temperature raising section may be adjacent to the fuel flow channel outlet provided for the heat exchanging section. The flow channel member for the oil flow channel may define the flow channel so that the oil flows through the temperature raising section in a direction that intersects with the flow direction of the fuel flow channel and that the oil that has passed through the temperature raising section reaches a vicinity of the fuel flow channel outlet.

If the fuel flow channel in each layer is implemented as a U-turn flow channel including a forward path and a backward path, the outlet provided for the heat exchanging section can be arranged in a predetermined direction so as to be adjacent to the inlet provided for the temperature raising section.

With respect to the fuel flow channel with such a layout, the oil flow direction in the temperature raising section is defined by the flow channel member in the oil flow channel so as to intersect with the fuel flow channel flow direction. By adopting such a configuration, the oil that has passed through the temperature raising section can automatically reach the vicinity of the fuel flow channel outlet. Thus, the plate fin heat exchanger body can easily introduce the oil that has passed through the temperature raising section into a region surrounding the aircraft fuel outlet in the heat exchanging section. Note that in the heat exchanging section, the oil flow channel, as well as the fuel flow channel, may also be implemented as a U-turn flow channel including a forward path and a backward path so that the oil flow direction becomes opposite from the aircraft fuel flow direction.

The oil flow channel may have a narrower flow channel width in the temperature raising section than in the heat exchanging section.

As described above, since the temperature raising section raises the temperature of the heat exchanger body with the heat of the oil, the heat transfer coefficient from the oil to the heat exchanger body is preferably high. If the flow channel width of the oil flow channel is set to be narrower in the temperature raising section, then the flow velocity of the oil flowing there can be increased, and the heat transfer coefficient from the oil to the heat exchanger body can be increased in the temperature raising section. This will work effectively in allowing the temperature raising section to raise the local temperature more efficiently.

In at least each of the fuel flow channels stacked, corrugated fins may be arranged. In the fuel flow channel, the corrugated fin arranged in the temperature raising section may have a lower heat exchange efficiency than the corrugated fin arranged in the heat exchanging section.

One of the reasons why the water in an aircraft fuel freezes is that the temperature of corrugated fins or any other constituent member of a heat exchanger body is as low as that of the aircraft fuel. In view of this consideration, the corrugated fins arranged in the temperature raising section has its heat exchange efficiency decreased on the fuel flow channel. This makes it possible to keep the temperature of the corrugated fin as high as possible with respect to the temperature of the aircraft fuel, thus preventing the water in the aircraft fuel from freezing. Note that it is not a primary object for the temperature raising section to raise the temperature of the aircraft fuel. That is why no inconveniences will be caused even if an increase in the temperature of the aircraft fuel is reduced by the corrugated fins with low heat exchange efficiency.

In this case, the corrugated fins with low heat exchange efficiency to be provided for the temperature raising section may have a broader fin pitch than the corrugated fins provided for the heat exchanging section. Then, the fin gaps defined by the corrugated fins come to have a broader lateral cross-sectional area, which reduces a variation in the flow velocity and pressure of the fuel that is going to flow in. In addition, even if the water in the fuel froze around the fuel inlet, the resultant ice would still pass through the inlet easily. Consequently, the broader lateral cross-sectional area of the fin gaps prevents the fuel inlet from being blocked.

Optionally, herringbone corrugated fins may be provided for the heat exchanging section, whereas plane corrugated fins may be provided for the temperature raising section, for example. That is to say, the plane corrugated fins have relatively low heat exchange efficiency.

The heat exchanger body may have a shell-and-tube structure including: a cylindrical shell which is configured to define an oil flow channel to let the oil flow through by having its opening at each of both ends closed with an end plate; and a plurality of tubes which define a fuel flow channel to let the aircraft fuel flow through by being arranged inside the shell and by communicating with members outside of the shell via the end plate. Inside the shell, a boundary wall member configured to separate the temperature raising section and the heat exchanging section from each other may be arranged.

That is to say, a heat exchanger having the characteristic configuration of the present disclosure does not have to be the plate fin heat exchanger body described above but may also be implemented as a shell-and-tube heat exchanger body as well. In the shell-and-tube heat exchanger body, a boundary wall member that separates the temperature raising section and the heat exchanging section from each other is arranged in the shell that defines the oil flow channel.

The heat exchanger body with the shell-and-tube structure may further have a bypass passage which is provided outside of the shell and which forms part of the oil flow channel by allowing the temperature raising section and the heat exchanging section that are separated from each other by the boundary wall member to communicate with each other.

By adopting this configuration, the oil that has passed through the temperature raising section can pass through the bypass passage provided outside of the shell so as to be introduced into the vicinity of the outlet of the fuel flow channel in the heat exchanging section inside the shell.

The temperature raising section may be arranged between the end plate and the boundary wall member adjacent to the end plate. At least one baffle may be arranged between the end plate and the boundary wall member. The inlet to let the oil enter the shell may be arranged closer to the boundary wall member than the baffle is. The oil that has entered the shell through the inlet may flow across the baffle and then run along an axis of the cylindrical shell toward the end plate.

In the shell-and-tube heat exchanger body, it is the end plate corresponding to the aircraft fuel inlet that should have its temperature raised more significantly than any other member. To raise the temperature of the end plate effectively, the oil that has entered the shell (i.e., that has entered the temperature raising section) needs to be brought into contact with the end plate in a sufficiently broad area. For example, if an inlet were provided close to the end plate, the oil that has entered the shell would flow along the surface of the end plate, thus lessening the effect of raising the temperature of the end plate.

To overcome this problem, in this configuration, at least one baffle is arranged between the boundary wall member and the end plate, and the oil inlet is arranged closer to the boundary wall member than the baffle is. Thus, the oil that has flowed in the radial direction of the shell to enter the shell through the inlet runs along the axis of the cylindrical shell across the baffle and toward the end plate. This allows the oil to make good contact with the end plate, thus raising the temperature of the end plate effectively.

The temperature raising section may be arranged between the boundary wall member and the end plate. Respective tip ends of the tubes that form the aircraft fuel inlet may be supported by the end plate that defines the temperature raising section. The tip ends of the tubes may be embedded in the end plate without running through the end plate.

Suppose the tip ends of the tubes run through the end plate and project out of the surface of the end plate. In that case, even if the temperature of the end plate is kept raised, the temperature at the tip ends of the tubes can still be lower than that of the end plate. That is why at the tip ends of the tubes, the water in the aircraft fuel may freeze or ice may be deposited. In addition, if the tip ends of the tubes project out of the surface of the end plate, the inlet will be blocked easily with the deposited ice.

On the other hand, if the tip ends of the tubes are embedded in the end plate, there will be no portions with a relatively low temperature, thus preventing the water in the aircraft fuel from freezing. In addition, since no portions project out of the surface of the end plate anymore, no ice will be deposited there, either. As a result, that unwanted situation where the fuel inlet is blocked can be avoided even more effectively.

### ADVANTAGES OF THE INVENTION

As can be seen from the foregoing description, in the aircraft heat exchanger described above, its heat exchanger body is divided into a temperature raising section and a heat exchanging section. In the temperature raising section, the heat exchanger body is locally heated with high-temperature oil that has just entered the heat exchanger body, thereby preventing water in the aircraft fuel from freezing or any member from being covered with ice anywhere. On the other hand, the heat exchanging section is configured so that the flow directions of the aircraft fuel and oil are opposite from each other, which contributes to increasing the heat exchange efficiency between the aircraft fuel and the oil significantly and cutting down the size and weight of the aircraft heat exchanger beneficially.

### BRIEF DESCRIPTION OF THE DRAWINGS

[FIG. 1] FIG. 1 is a conceptual diagram illustrating a unique technical feature of the configuration disclosed herein.
[FIG. 2] FIG. 2 is a perspective view illustrating the appearance of a plate fin aircraft heat exchanger.
[FIG. 3] FIG. 3 is a cross-sectional view illustrating an exemplary configuration for a fuel flow channel of the plate fin heat exchanger.
[FIG. 4] FIG. 4 is a cross-sectional view illustrating an exemplary configuration for an oil flow channel of the plate fin heat exchanger.
[FIG. 5] FIG. 5 is a cross-sectional view illustrating another exemplary configuration for an oil flow channel, which is different from the one shown in FIG. 4.
[FIG. 6] FIG. 6 is a perspective view illustrating the appearance of a shell-and-tube heat exchanger.
[FIG. 7] FIG. 7 is a vertical cross-sectional view of the shell-and-tube heat exchanger.
[FIG. 8] FIG. 8 is a cross-sectional view illustrating, on a larger scale, a portion of the shell-and-tube heat exchanger in the vicinity of a fuel inlet thereof.

### DESCRIPTION OF EMBODIMENTS

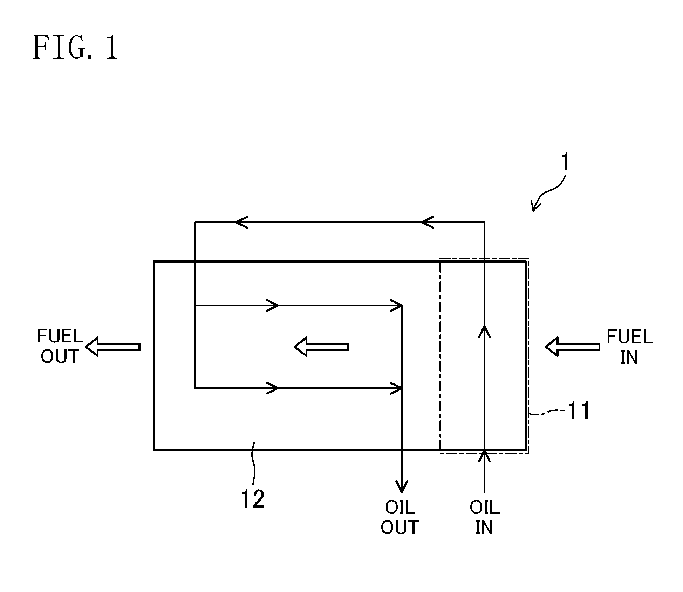

Embodiments of an aircraft heat exchanger will now be described with reference to the accompanying drawings. Note that the embodiments to be described below are just examples. FIG. 1 is a conceptual diagram illustrating a configuration for an aircraft heat exchanger 1, which will be hereinafter simply referred to as a "heat exchanger 1". The heat exchanger 1 is substantially the same as its heat exchanger body. The heat exchanger 1 is mounted on an aircraft and exchanges heat either between a fuel for the aircraft and a lubricant for an engine or between the aircraft fuel and a lubricant for a power generator to be driven by the engine. The heat exchanger 1 cools the oil with the fuel. The temperature of the fuel may decrease to a very low level in various operating environments (e.g., when the aircraft is flying). In such a situation, water in the fuel may get supercooled. The fuel in such a condition may freeze around the inlet of the heat exchanger 1 in response to some variation in the flow velocity or pressure of the fuel that is going to enter the heat exchanger 1, for example. Also, if the temperature of any constituent member of the heat exchanger 1 is low, then a member at such a low temperature may be partially covered with ice. Once that happens, freezing will occur one after another from there, thus possibly depositing thick ice there gradually. The thick ice deposited might block the fuel inlet of the heat exchanger 1. The heat exchanger 1 shown in FIG. 1 prevents water in the fuel from freezing or any member from being covered with ice anywhere in that way and contributes to increasing its own heat exchange efficiency.

The heat exchanger 1 shown in FIG. 1 is divided into a temperature raising section 11 (which is indicated by the one-dot chain rectangle) and a heat exchanging section 12 that is the rest of the heat exchanger 1. The temperature raising section 11 has a fuel inlet. In the temperature raising section 11, the temperature of the fuel is so low, and variations in the flow velocity and pressure of the fuel are so significant, in the vicinity of the fuel inlet that water in the fuel will freeze easily there.

In the heat exchanger 1 shown in FIG. 1, the fuel enters the heat exchanger 1 from the right-hand side on the paper, flows through the heat exchanger 1 from the right to the left, and then leaves the heat exchanger 1 from the left-hand side on the paper, as indicated by the open arrows. The fuel that has entered this heat exchanger 1 passes through the temperature raising section 11, is introduced into the heat exchanging section 12, and then flows out of the heat exchanging section 12. A fuel outlet is provided for the heat exchanging section 12.

Also, as will be described later, the temperature raising section 11 locally heats the heat exchanger 1 in order to prevent water in the fuel from freezing or any member from being covered with ice anywhere. The temperature of the heat exchanger 1 may be raised with the heat of the oil. An oil inlet is provided for the temperature raising section 11. Since the high-temperature oil enters the temperature raising section 11 first as indicated by the fine arrows in FIG. 1, the temperature raising section 11 can be heated effectively. Thus, even if any variation occurs in flow velocity or pressure when low-temperature fuel flows in through the inlet, the high-temperature oil can not only prevent water in the fuel from freezing but also prevent any member around the inlet from being partially covered with ice. Furthermore, even if any member has been partially covered with ice once, the high-temperature oil removes or melts that ice right away. In this manner, deposition of ice can be avoided, and therefore, no ice deposited will block the inlet anymore. This temperature raising section 11 prevents water in the fuel from freezing and any member from being partially covered with ice by not so much raising the temperature of the fuel as raising the temperature of the heat exchanger 1.

The heat exchanging section 12 mostly exchanges heat between the fuel and the oil. If both of the fuel and oil inlets were provided at the same position, then the flow directions of the fuel and the oil would ordinarily be parallel to each other in the heat exchanger. That is to say, the heat exchanger would be a parallel flow type.

In the heat exchanger 1 shown in FIG. 1, on the other hand, the oil that has passed through the temperature raising section 11 is introduced into the heat exchanging section 12 from the vicinity of the fuel outlet of the heat exchanging 12. Thus, in the heat exchanging section 12, the fuel flows from the right to the left on the paper, while the oil flows from the left to the right on the paper. That is to say, the flow directions of the fuel and oil become opposite from each other. By implementing the heat exchanger 1 as such a counter flow type in this manner, the heat exchange efficiency increases. Consequently, the heat exchanger 1 can have its size and weight reduced so much as to be mounted on an aircraft advantageously.

As can be seen from the foregoing description, the heat exchanger 1 of the present disclosure includes a temperature raising section 11 which keeps the temperature raised with the oil and a heat exchanging section 12 which is implemented as a counter flow type, thus not only preventing water in the fuel from freezing or any member from being partially covered with ice but also increasing the heat exchange efficiency simultaneously, which is an advantageous feature of this heat exchanger 1. A plate fin heat exchanger and shell-and-tube heat exchanger, both having this characteristic configuration, will now be described with reference to the accompanying drawings.

### (Example of plate fin heat exchanger)

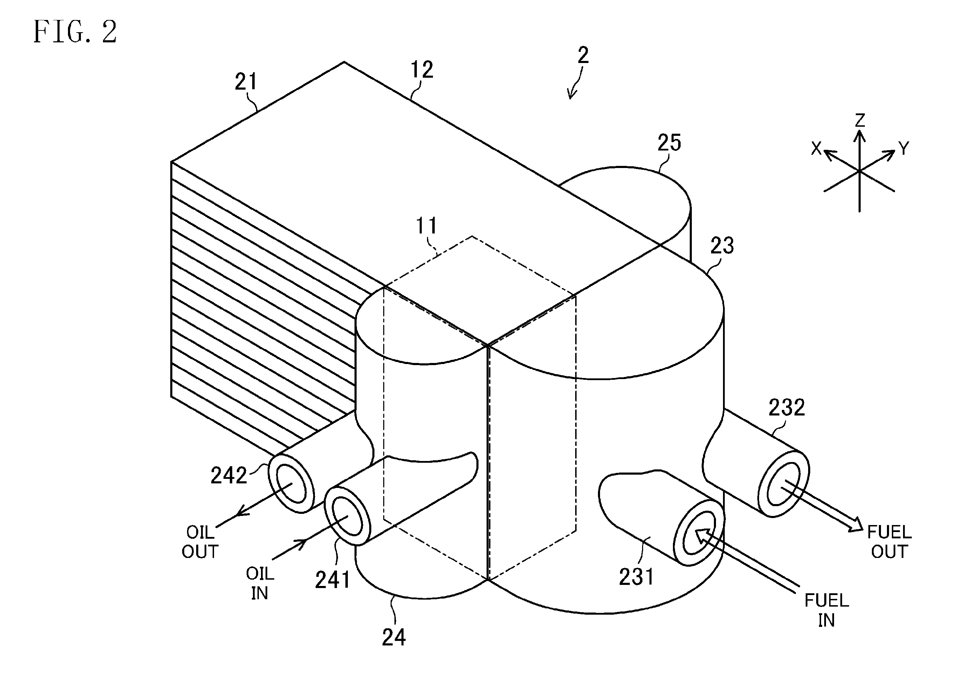

FIG. 2 illustrates the appearance of an exemplary plate fin heat exchanger 2 having the characteristic configuration described above. This heat exchanger 2 also exchanges heat between an aircraft fuel and oil. In FIG. 2, the reference numeral 21 denotes a core. The reference numeral 23 denotes a header which is attached to the core 21 and which allows a fuel to flow into/out of the core 21. The reference numeral 24 denotes a header which is also attached to the core 21 and which allows oil to flow into/out of the core 21. The reference numeral 25 denotes a mixing header which is attached to the core 21 and which is provided for the oil that has passed through the temperature raising section 11 of the core 21 as will be described in detail later. In the following description, X, Y and Z axes are defined as illustrated in FIG. 2 for the sake of convenience. Specifically, the X axis is defined to be the direction pointing from a lower right portion of the paper to an upper left portion of the paper, the Y axis is defined to be the direction pointing from a lower left portion of the paper to an upper right portion of the paper, and the Z-axis is defined to be the direction pointing from the bottom to the top of the paper.

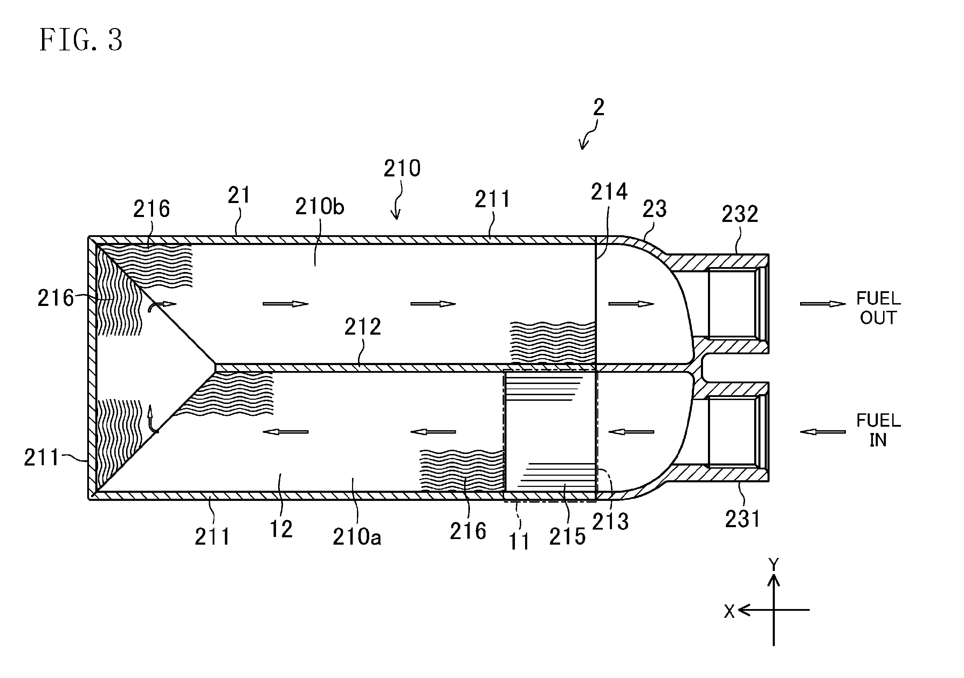

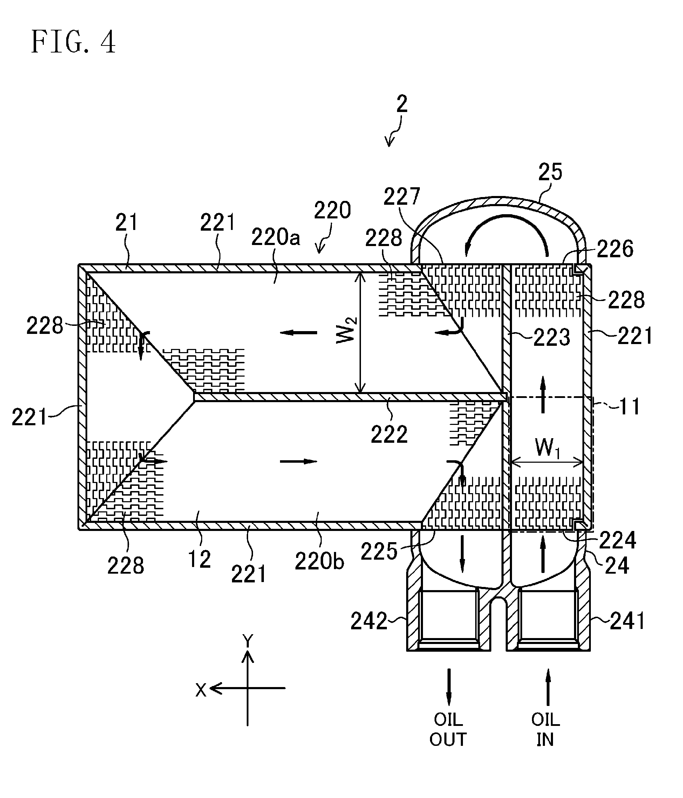

The core 21 is formed by alternately stacking, one upon the other, a plurality of fuel flow channels 210 shown in FIG. 3 and a plurality of oil flow channels 220 shown in FIG. 4 with tube plates (not shown clearly in FIG. 2) interposed between them. Note that illustration of the oil header 24 and mixing header 25 is omitted in FIG. 3 and illustration of the fuel header 23 is omitted in FIG. 4. The core 21 can be made by bonding together respective members to be described later by brazing, for example.

As shown in FIG. 3, the fuel flow channel 210 is defined by a tube plate and a side bar 211. The internal space of the flow channel 210 is partitioned in the Y-axis direction by a partition member 212 which runs in the X-axis direction. In this manner, the fuel flow channel 210 has a two-path configuration comprised of a forward path 210a and a backward path 210b, each of which extends in the X-axis direction. The inlet 213 and outlet 214 of the fuel flow channel 210 are cut through a side surface of the core 21 that faces the X-axis direction (i.e., the side surface on the right-hand side of the paper on which FIG. 3 is drawn) so as to be arranged side by side in the Y-axis direction. Thus, the inlet and outlet 213, 214 of the fuel flow channel 210 are separated from each other by the partition member 212.

The temperature raising section 11 of this core 21 is a portion that is surrounded with the one-dot chain and that corresponds to a region in the vicinity of the fuel inlet 213. The rest of the core 21 other than the temperature raising section 11 is the heat exchanging section 12.

In the example shown in FIG. 3, the fuel header 23 has its internal space partitioned into an inlet-side portion and an outlet-side portion. The inlet-side portion of the header 23 communicates with the inlet 213 of each of the fuel flow channels 210 stacked, and the outlet-side portion of the header 23 communicates with the outlet 214 of each of the fuel flow channels 210 stacked. In addition, a port 231 through which the fuel flows in is further provided for the header 23 so as to communicate with the inlet-side portion, and a port 232 through which the fuel flows out is further provided for the header 23 so as to communicate with the outlet-side portion. Optionally, the fuel header may be split into an inlet-side header and an outlet-side header, unlike the example illustrated in FIG. 3.

In the fuel flow channel 210, arranged are corrugated fins 215 and 216 to increase the heat transfer area. The corrugated fins 215 and 216 have been cut out in a rectangular or triangular shape and are arranged over the forward path 210a, the backward path 210b and the U-turn portion that connects the forward and backward paths 210a, 210b together. In this core 21, the corrugated fins 215 arranged in the temperature raising section 11 are of a different type from, and have a lower heat exchange efficiency than, the corrugated fins 216 arranged in the heat exchanging section. Specifically, although the corrugated fins are illustrated just conceptually in FIG. 3, actually the corrugated fins 215 are plane corrugated fins with a relatively broad pitch, and the corrugated fins 216 are herringbone corrugated fins with a relatively narrow pitch. Note that any appropriate types of corrugated fins may also be selected as the corrugated fins 215 arranged in the temperature raising section 11 and heat exchanging section 12.

As indicated by the open arrows in FIG. 3, the fuel that has entered the header 23 through the inlet port 231 flows into the core 21 through the inlet 213 and runs in the X-axis direction along the forward path 210a. After that, the fuel turns back at the U-turn portion to flow backward in the X-axis direction along the backward path 210b. Then, the fuel flows out through the outlet 214 to go back to the header 23. In the meantime, the fuel exchanges heat with the oil mainly in the heat exchanging section 12, thereby cooling the oil and raising its own temperature. In this case, at the fuel inlet 213, the fuel flows into the respective fin gaps with a small cross section which are defined by the corrugated fins 215, resulting in a significant variation in flow velocity and pressure. If the water in the fuel is supercooled at this point in time, then the variation in flow velocity and pressure triggers freezing of that water to get a region around the inlet 213 partially covered with ice. Once that region has iced in this manner, the water in the fuel in contact with the ice will freeze from one position to another, thus depositing thick ice in the end. As a result, the inlet 213 could be blocked with the thick ice deposited.

Although the fuel flow channel 210 has such a configuration, the oil flow channel 220 has a configuration as shown in FIG. 4. Specifically, the oil flow channel 220 is defined by a tube plate and a side bar 221. Inside the oil flow channel 220, arranged is a flow channel member 223, which runs in the Y-axis direction unlike the fuel flow channel 210. This flow channel member 223 divides the space inside the oil flow channel 220 into two regions in the X-axis direction. The temperature raising section 11 is separated in the X-axis direction from the heat exchanging section 12 by the flow channel member 223 but communicates in the Y-axis direction with the heat exchanging section 12.

Inside the heat exchanging section 12, arranged is a partition member 222 which runs in the X-axis direction. In this manner, the oil flow channel 220 in the heat exchanging section 12 has a two-path configuration comprised of a forward path 220a and a backward path 220b, each of which extends in the X-axis direction, just like the fuel flow channel 210. The inlet 224 and outlet 225 of the oil flow channel 220 are cut through a side surface of the core 21 that faces the Y axis direction (i.e., the surface at the bottom of the paper on which FIG. 4 is drawn) so as to be arranged side by side in the X-axis direction. The inlet 224 of the oil flow channel 220 is provided for the temperature raising section 11. The inlet and outlet 224, 225 of the oil flow channel 220 are separated from each other by the flow channel member 223.

Through the other side of the core 21 that is located opposite from the side surface with the inlet 224 and outlet 225, a second outlet 226 and a second inlet 227 have been cut and are arranged side by side in the X-axis direction. The second outlet 226 is a port through which the oil that has passed through the temperature raising section 11 once flows out of the core 21. The second inlet 227 is a port through which the oil flows into the core 21 again. The second outlet 226 and second inlet 227 are also separated from each other by the flow channel member 223.

The oil header 24, as well as the fuel header 23, has its internal space partitioned into an inlet-side portion and an outlet-side portion. The inlet-side portion of the header 24 communicates with the inlet 224 of each of the oil flow channels 220 stacked, and the outlet-side portion of the header 24 communicates with the outlet 225 of each of the oil flow channels 220 stacked. In addition, a port 241 through which the fuel flows in is further provided for the header 24 so as to communicate with the inlet-side portion, and a port 242 through which the fuel flows out is further provided for the header 24 so as to communicate with the outlet-side portion. Optionally, the oil header may be split into an inlet-side header and an outlet-side header.

The mixing header 25 communicates with not only the respective second outlets 226 but also the respective second inlets 227 of the oil flow channels 220 stacked. The oil that has flowed into the mixing header 25 through the respective oil flow channels 220 stacked gets mixed together in the mixing header 25 and then is distributed to the respective oil flow channels 220 stacked through the second inlets 227. In this manner, the temperatures of the oil in the respective layers can be equalized with each other.

In the oil flow channel 220, also arranged are corrugated fins 228 to increase the heat transfer area. The corrugated fins 228 have been cut out in a rectangular or triangular shape and are arranged over the entire oil flow channel 220. Note that any appropriate types of corrugated fins may also be selected as the corrugated fins 228 arranged in the oil flow channel 220. Although illustrated just conceptually in FIG. 4, serrate corrugated fins are adopted in this example.

As indicated by the fine arrows in FIG. 4, the oil that has entered the header 24 through the inlet port 241 flows into the core 21 (i.e., into the temperature raising section 11) through the inlet 224, and then runs in the Y-axis direction along the flow channel defined by the flow channel member 223. After having passed through the temperature raising section 11 in this manner, the oil is introduced into a region of the heat exchanging section 12 in the vicinity of the fuel outlet 214 and then flows into the mixing header 25 through the second outlet 226. In the mixing header 25, that oil gets mixed with the oil that has passed through the temperature raising sections 11 of the respective oil flow channels 220 stacked. Then, the oil, of which the temperature has been substantially equalized, flows into the core 21 again through the second inlet 227.

After that, the oil flows in the X-axis direction along the forward path 220a in the heat exchanging section 12, and then turns back at the U-turn portion to start flowing backward in the X-axis direction along the backward path 220b in turn. Thereafter, the oil flows out through the outlet 225 to reach the header 24. In the heat exchanging section 12, the flow directions of the fuel and oil become opposite from each other.

As can be seen from the foregoing description, in the plate fin heat exchanger 2, the oil inlet 224 is provided for the temperature raising section 11, which allows the high-temperature oil that has just entered the core 21 to raise the temperatures of the tube plate defining the oil and fuel flow channels 220 and 210 and the corrugated fins 215 arranged in the fuel flow channel 210. In general, around the inlet 213 of the fuel flow channel 210, water in the fuel tends to freeze easily and some member tends to be partially covered with ice easily. However, by keeping raised the temperature of a metallic portion with which the fuel contacts, the water in the fuel can be prevented from freezing. In addition, it is also possible to prevent effectively the metallic portion from being partially covered with ice. Furthermore, even if the corrugated fin 215 or any other member has been partially covered with ice once, that ice should be removed or melt away promptly under the intense heat. As a result, no ice should be deposited on a region around the fuel inlet 213 without fail. Consequently, an unwanted situation where the fuel inlet 213 is blocked with ice deposited can be avoided.

Note that if the water in the fuel has frozen in the vicinity of the fuel inlet 213 and the resultant ice has entered the fuel flow channel 210, then the pressure of the fuel flowing through the fuel flow channel 210 forces the ice to flow away. As a result, the corrugated fins 215, 216 are hardly, if ever, covered with any ice. Therefore, no ice should be deposited at any point along the fuel flow channel 210. In addition, since there is only a little variation in flow velocity or pressure along the fuel flow channel 210, the water in the fuel rarely freezes, either.

In this embodiment, in the oil flow channel 220, the width W₁ of the flow channel defined by the flow channel member 223 is set to be narrower than the width W₂ of the forward and backward paths 220a and 220b in the heat exchanging section 12 as shown in FIG. 4. This configuration makes the flow velocity of the oil passing through this flow channel relatively high. Since the flow channel with the narrower width corresponds to the oil flow channel in the temperature raising section 11, the flow velocity of the oil becomes relatively high in the temperature raising section 11. This works effectively in increasing the thermal conductivity of the oil through a constituent member of the core 21 (such as the tube plate or corrugated fin 215 described above) in the temperature raising section 11 and keeping the temperature of the temperature raising section 11 raised.

In the fuel flow channel 210, on the other hand, the corrugated fins 215 arranged in the temperature raising section 11 have relatively low heat exchange efficiency as described above. Thus, the temperature of the corrugated fins 215 heated by the temperature raising section 11 can be kept as high as possible with respect to the temperature of the fuel, which should contribute effectively to preventing water in the fuel from freezing in the temperature raising section 11. Also, in this example, the corrugated fins 215 arranged in the temperature raising section 11 have a relatively wide fin pitch. As a result, the respective fin gaps defined by such corrugated fins come to have a relatively large lateral cross-sectional area. Consequently, the variation in flow velocity or pressure that could be caused when the fuel flows in can be reduced. In addition, even if water in the fuel has frozen anyway, the resultant ice will pass through the inlet and enter the core 21 easily. This also works effectively in preventing deposited ice from blocking the fuel inlet.

In this manner, the temperature raising section 11 is configured to prevent water in the fuel from freezing or any member from being partially covered with ice, and the heat exchanging section 12 is configured so that the flow directions of the fuel and oil become opposite from each other, thus allowing this heat exchanger to have increased heat exchange efficiency. In this case, if the fuel flow channel 210 has a two-path configuration comprised of the forward and backward paths 210a and 210b, the fuel inlet and outlet 213 and 214 can be arranged side by side (see FIG. 3). That is why by providing the flow channel member 223 for the oil flow channel 220 so that the oil flow direction in the temperature raising section 11 intersects with the fuel flow direction, the oil that has passed through the temperature raising section 11 can be introduced automatically into a region of the heat exchanging section 12 in the vicinity of the fuel outlet. That is to say, the plate fin heat exchanger 1 realizes the characteristic configuration described above easily thanks to its layout.

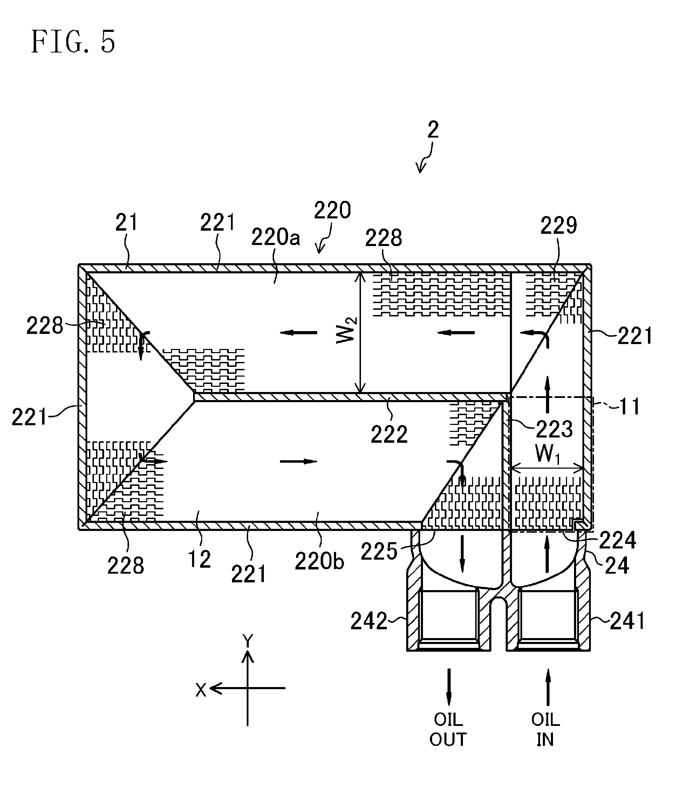

Optionally, the oil flow channel 220 may have a configuration with no mixing header 25 as shown in FIG. 5, for example. Specifically, in the exemplary configuration shown in FIG. 5, the flow channel member 223 has its length in the Y-axis direction shortened to the length of the temperature raising section 11. Accordingly, the second outlet 226 and second inlet 227 are omitted. In addition, triangular corrugated fins 229 are arranged adjacent to the temperature raising section 11, i.e., in the vicinity of the outlet 214 of the fuel flow channel 210. In this manner, the flow direction of the oil that has passed through the temperature raising section 11 is changed inside the core 21 from the Y-axis direction into the X-axis direction. In FIG. 5, any component also shown in FIG. 4 and having substantially the same function as its counterpart is identified by the same reference numeral as its counterpart's. By omitting the mixing header 25 in this manner, the size and weight of the heat exchanger 2 can be reduced even more effectively.

Note that in the plate fin heat exchanger, the fuel flow channel and the oil flow channel do not have to have the two-path configuration but may also have a single-path configuration, or even a configuration with three or more paths. Nevertheless, if the single-path configuration or the configuration with three or more paths is adopted, the inlet and outlet of the fuel flow channel are no longer arranged side by side, and therefore, the configuration of the oil flow channel needs to be changed. For example, as in the exemplary configuration with the mixing header 25, the oil that has passed through the temperature raising section 11 may be allowed to flow through the outlet of the core 21 into the mixing header outside of the core 21 and then flow into the core again through an inlet arranged in the vicinity of the outlet of the fuel flow channel.

### (Example of shell-and-tube heat exchanger)

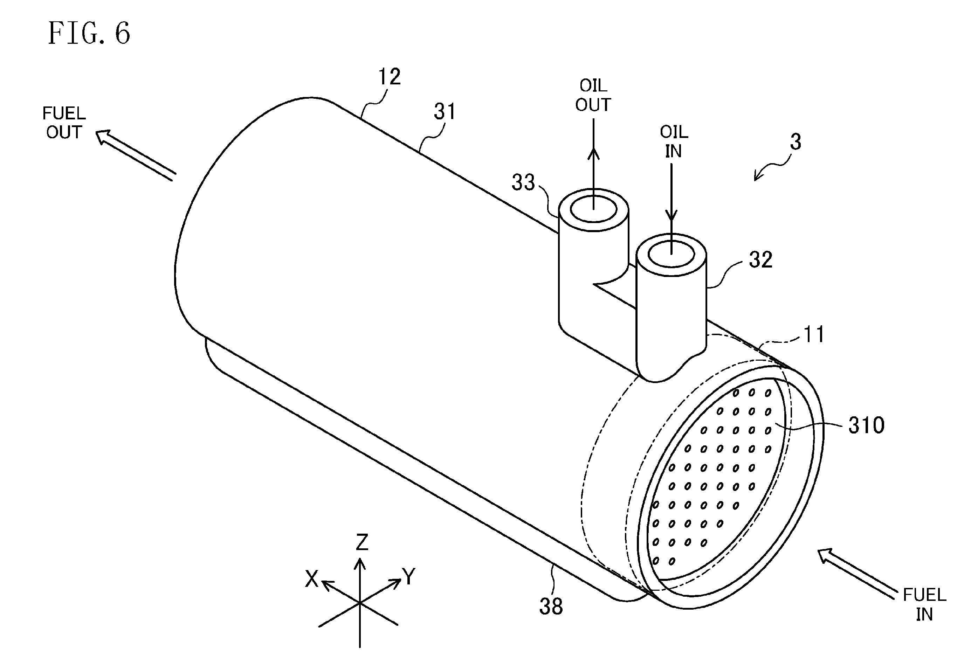

FIG. 6 illustrates the appearance of a shell-and-tube heat exchanger 3 having the characteristic configuration shown in FIG. 1. This heat exchanger 3 also exchanges heat between an aircraft fuel and oil. In the following description, X, Y and Z axes are defined as illustrated in FIG. 6 for the sake of convenience. Specifically, the X axis is defined to be the direction pointing from a lower right portion of the paper to an upper left portion of the paper, the Y axis is defined to be the direction pointing from a lower left portion of the paper to an upper right portion of the paper, and the Z-axis is defined to be the direction pointing from the bottom to the top of the paper.

This heat exchanger 3 includes a circular cylindrical shell 31, both ends of which have holes and are connected to a fuel passage (not shown). In the example illustrated in FIG. 6, the fuel flows into the heat exchanger 3 (which is arranged so that the axis of its cylindrical shell 31 is parallel to the X-axis direction) through its proximal end, runs inside the heat exchanger 3 in the X-axis direction, and then flows out of the heat exchanger 3 through its distal end. On the other hand, the oil flows into the shell 31 through an inlet port 32 which is attached to the outer peripheral surface of the shell 31 and flows out of the shell 31 through an outlet port 33 which is arranged beside the inlet port 32 on the outer peripheral surface of the shell, as will be described in detail later.

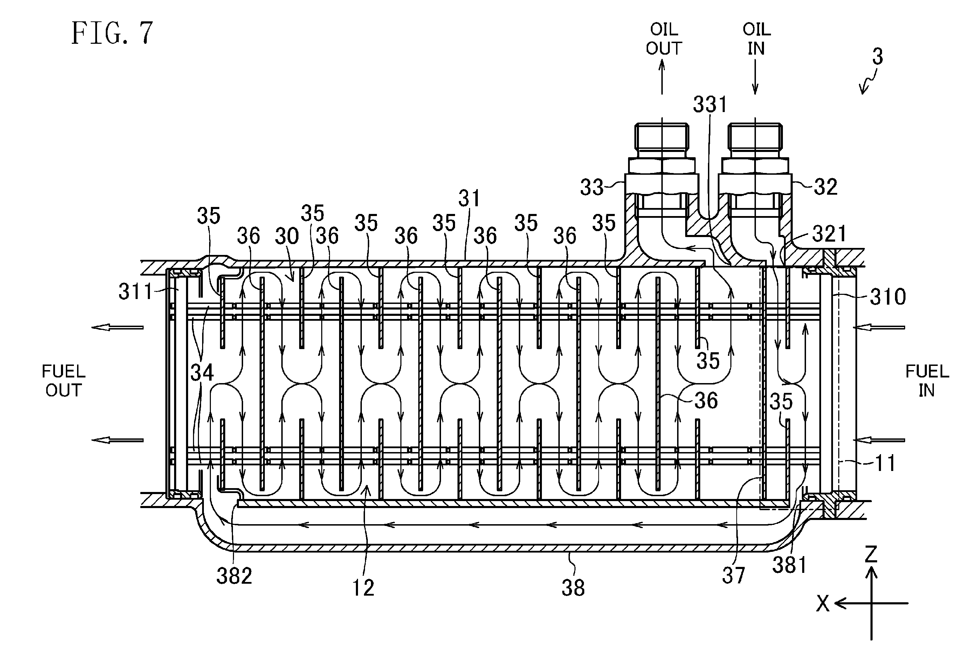

FIG. 7 is a vertical cross-sectional view of the shell-and-tube heat exchanger 3. Both ends of the shell 31 are closed with end plates 310 and 311, which function as a boundary wall that separates the fuel passage from the oil passage in the shell 31 on the fuel inlet side (i.e., on the right-hand side on the paper on which FIG. 7 is drawn) and on the fuel outlet side (i.e., on the left-hand side on the paper on which FIG. 7 is drawn), respectively.

In the inner space of the shell 31 that is defined by the end plates 310 and 311, arranged is a matrix 30 which is formed by a lot of tubes 34 and baffles 35, 36. The matrix 30 with the configuration to be described later may be fabricated by bonding the respective members together by brazing.

Each of the tubes 34 is a fine pipe which functions as a fuel flow channel. Those tubes 34 each run in the X-axis direction and are arranged with a predetermined gap left between them both in the radial and circumferential directions of the shell 31. Note that illustration of some tubes 34 is omitted for the sake of simplicity. Each of the tubes 34 has both ends thereof inserted into through holes which are cut through the end plates 310 and 311, and thus has their ends supported by the end plates 310 and 311, respectively. Also, the openings at both ends of each tube 34 communicate with a fuel passage via the end plates 310 and 311, respectively. In this manner, the opening at one end of each tube 34 which is supported by the end plate 310 on the fuel inlet side serves as a fuel inlet, while the opening at the other end of that tube 34 which is supported by the end plate 311 on the fuel outlet side serves as a fuel outlet.

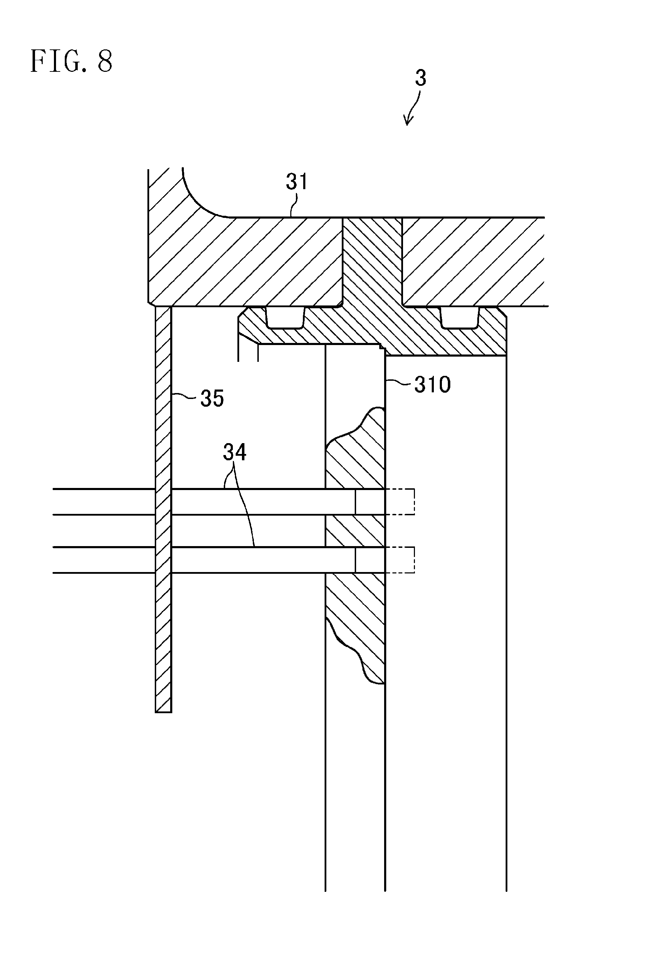

As shown on a larger scale in FIG. 8, the respective tip ends of the tubes 34 are embedded in the end plate 310 on the fuel inlet side. That is to say, the tubes 34 are not configured so that their end runs through the end plate 310 and projects out of the surface of the end plate 310 as indicated by the phantom lines in FIG. 8. This configuration prevents the tip end of any tube 34 from being covered with ice as will be described later.

As described above, in the inner space of the shell 311 defined by the end plates 310 and 311, a plurality of baffles 35, 36 are arranged at regular intervals in the X-axis direction. The plurality of baffles 35, 36 includes annular ring baffles 35, each of which has a through hole at its center and which is internally fitted into the inner peripheral surface of the shell 31, and disklike disk baffles 36, each of which has no through hole at its center but which is arranged with a predetermined gap left in the radial direction with respect to the inner peripheral surface of the shell 31. Those ring baffles 35 and disk baffles 36 are alternately arranged in the X-axis direction. Each of the tubes 34 is arranged to extend through all of those ring baffles 35 and disk baffles 36.

With such a configuration adopted, the fuel flows into the tubes 34 through their tip end openings on the fuel inlet side of the heat exchanger 3 as indicated by the open arrows in FIG. 7, runs inside the shell 31 in the X-axis direction along the tubes 34, and then flows out of the tubes 34 through their tip end openings on the fuel outlet side of the heat exchanger 3.

Inside the shell 31, a boundary wall member 37 is arranged so as to be located at a predetermined distance in the X-axis direction from the end plate 310 on the inlet side. The boundary wall member 37 is a disklike member which is internally fitted into the inner peripheral surface of the shell 31. In this manner, the boundary wall member 37 divides the inside of the shell 31 into two spaces that do not communicate with each other in the X-axis direction. The boundary wall member 37 is a member that separates the temperature raising section 11 from the heat exchanging section 12. The space between the boundary wall member 37 and the end plate 310 on the inlet side defines the temperature raising section 11, and the space between the boundary wall member 37 and the end plate 311 on the outlet side defines the heat exchanging section 12. A ring baffle 35 is arranged between the boundary wall member 37 and the end plate 310.

The inlet port 32 communicates with the temperature raising section 11, and more specifically, communicates with the space that is located closer to the boundary wall 37 than the ring baffle 35 arranged between the boundary wall member 37 and the end plate 310 is. On the other hand, the outlet port 33 communicates with the heat exchanging section 12, and more specifically, is located in the vicinity of the boundary wall 37. In other words, the oil inlet and outlet 321 and 331 are arranged on the shell 31 so as to be adjacent to each other with the boundary wall member 37 interposed between them.

On the other side of the shell 31 opposite from the oil inlet and outlet 321 and 331 with respect to the axis of the cylindrical shell 31, arranged are a second outlet 381 to let the oil flow out of the shell 31 and a second inlet 382 to let the oil flow into the shell 31. The second outlet 381 is arranged between the boundary wall member 37 and the end plate 310 on the inlet side, more specifically, between the end plate 310 on the inlet side and the ring baffle 35 that is provided between the boundary wall member 37 and the end plate 310 in the example illustrated in FIG. 7. Thus, the second outlet 381 communicates with the temperature raising section 11. On the other hand, the second inlet 382 is provided in the vicinity of the end plate 311 on the outlet side, more specifically, between the end plate 311 on the outlet side and the ring baffle 35 that is located closer to the fuel outlet than any other one of the baffles 35 and 36 that are arranged side by side in the X-axis direction. Thus, the second inlet 382 communicates with a region of the heat exchanging section 12 around the fuel outlet.

The second outlet 381 and second inlet 382 communicate with each other through a bypass passage 38 which is provided outside of the shell 31. The bypass passage 38 is provided to make the temperature raising section 11 and heat exchanging section 12 communicate with each other outside of the shell 31. In the example illustrated in FIG. 7, the bypass passage 38 runs in the X-axis direction along the outer peripheral surface of the shell 31, and forms an integral part of the circular cylinder that functions as the shell 31. Although the bypass passage 38 forms an integral part of the shell 31 in the example illustrated in FIG. 7, the bypass passage 38 may also be provided as a pipe, for example, separately from the shell 31 in order to connect the second outlet 381 and second inlet 382 together.

With such a configuration, as indicated by the fine arrows in FIG. 7, the oil flows into the temperature raising section 11 of the shell 31 through the inlet port 32. The high-temperature oil that has just entered the heat exchanger 3 raises the temperature in the temperature raising section 11. Specifically, the temperature of the end plate 310 on the inlet side rises. In this case, the oil inlet 321 is located opposite from the end plate 310 with respect to the ring baffle 35. Particularly, since the second outlet 381 is provided between the ring baffle 35 and the end plate 310, the oil that has entered the temperature raising section 11 runs across the ring baffle 35 and goes toward the end plate 310 in the X-axis direction. By making the oil flow perpendicularly to the end plate 310 in this manner, the area of contact between the high-temperature oil and the end plate 310 increases so much that the temperature of the end plate 310 can be raised effectively. Specifically, if the oil inlet were arranged closer to the end plate 310 than the ring baffle 35 is and located rather close to the end plate 310, then the oil that has entered the temperature raising section 11 after having come in through the inlet and run in the radial direction of the shell 31 (i.e., in the Z-axis direction) would flow along the surface of the end plate 310 in the temperature raising section 11, too. Such oil flow should be unable to raise the temperature of the end plate 310 efficiently. In contrast, according to this configuration, the oil inlet 321 is positioned distant from the end plate 310 and the ring baffle 35 is interposed between the inlet 321 and the end plate 310, thereby changing the flow direction of the oil that has flowed in radially and creating a flow going along the axis of the cylindrical shell. As a result, the temperature of the end plate 310 can be raised more effectively.

In this manner, the temperature of the end plate 310 can be raised high enough to prevent water in the fuel from freezing in the vicinity of the fuel inlet and also prevent the end plate 310 and other members from being partially covered with ice. Consequently, an unwanted situation where the fuel inlet formed by the respective tip end openings of the tubes 34 is blocked with ice deposited can be avoided.

Also, as shown in FIG. 8, the respective tip ends of the tubes 34 are embedded in the end plate 310 and do not project from the surface of the end plate 310 as indicated by the phantom lines in FIG. 8. As described above, the end plate 310 is supposed to be heated from inside of the shell 31. If the respective tip ends of the tubes 34 projected from the outer surface of the end plate 310, then the temperature at the tip ends of the tubes 34 would be lower than that of the end plate 310, thus possibly covering the tip ends of the tubes 34 with ice and depositing some ice there. If that happened, the tip end openings of the tubes 34 could be blocked.

However, by embedding the tip ends of the tubes 34 in the end plate 310, the temperature at the tip ends of the tubes 34 can be kept as high as that of the end plate 310. In addition, the tip ends of the tubes 34 are not exposed, and therefore, can never be covered with any ice, thus preventing almost perfectly ice from being deposited in the vicinity of the fuel inlet to block the tip end openings of the tubes 34.

The oil that has run through the temperature raising section 11 once flows out of the shell 31 through the second outlet 381 that is cut through the temperature raising section 11. Then, the oil flows in the X-axis direction through the bypass passage 38 and enters the heat exchanging section 12 in the shell 31 through the second inlet 382.

The oil that has entered a portion of the heat exchanging section 12 where the fuel is going toward the outlet flows in the X-axis direction opposite from the flow direction of the fuel. Specifically, since the ring baffles 35 and disk baffles 36 are arranged alternately in the heat exchanging section 12, the oil passes through the through hole of the ring baffle 35 in the X-axis direction, flows radially outward in the shell 31, goes in the X-axis direction through the gap between the disk baffles 36 and the inner peripheral surface of the shell 31, and then flows radially inward in the shell 31 as indicated by the fine arrows in FIG. 7. In this manner, the axial and radial oil flows in the X-axis and radial directions are confluent into a single flow that runs through the heat exchanging section 12 across the respective tubes 34, while exchanging heat with the fuel flowing inside the tubes 34 in the meantime. In this manner, this heat exchanger is configured so that the fuel and oil flows become counter flows in the X-axis direction in the heat exchanging section 12, thus achieving higher heat exchange efficiency.

Then, the oil that has run in the X-axis direction through the heat exchanging section 12 to reach the vicinity of the boundary wall member 37 flows out of the shell 31 through the outlet port 33.

The oil inlet 321 does not always have to be arranged with respect to the shell 31 as illustrated in FIG. 7. Alternatively, the oil inlet 321 may also be arranged more distant from the end plate 310 on the inlet side and two or more baffles may be provided between the end plate 310 and the boundary wall member 37. As those baffles, ring and disk baffles 35 and 36 may be arranged alternately, for example.

### INDUSTRIAL APPLICABILITY

As can be seen from the foregoing description, the aircraft heat exchanger described above can not only prevent aircraft fuel from freezing or any member from being covered with ice anywhere but also increase the heat exchange efficiency as well, and therefore, can have its size and weight reduced effectively.

### DESCRIPTION OF REFERENCE CHARACTERS

- 1: aircraft heat exchanger
- 11: temperature raising section
- 12: heat exchanging section
- 2: plate fin heat exchanger
- 21: core (heat exchanger body)
- 210: fuel flow channel
- 210a: forward path
- 210b: backward path
- 213: fuel flow channel inlet
- 214: fuel flow channel outlet
- 215: corrugated fin
- 216: corrugated fin
- 220: oil flow channel
- 223: flow channel member
- 224: oil flow channel inlet
- 225: oil flow channel outlet
- 226: second outlet
- 227: second inlet
- 3: shell-and-tube heat exchanger
- 30: matrix (heat exchanger body)
- 31: shell (heat exchanger body)
- 310: end plate
- 311: end plate
- 34: tube
- 35: ring baffle
- 37: boundary wall member
- 38: bypass passage

## Claims

1. An aircraft heat exchanger comprising a heat exchanger body configured to exchange heat between an aircraft fuel and oil that are passing through the heat exchanger body, wherein
the heat exchanger body includes: a temperature raising section configured at least to raise a temperature of the heat exchanger body locally; and a heat exchanging section configured to exchange heat between the aircraft fuel and the oil,
the temperature raising section has inlets for the aircraft fuel and the oil, respectively, and has its temperature raised by the oil that has entered the heat exchanger body through the inlet, and
the heat exchanging section has outlets for the aircraft fuel and the oil, and is configured to introduce the oil that has passed through the temperature raising section into the heat exchanging section from around the outlet for the aircraft fuel so that flow directions of the aircraft fuel and the oil become opposite from each other.

2. The aircraft heat exchanger of claim 1, wherein the heat exchanger body has a plate fin structure which is configured by alternately stacking, one upon the other, fuel flow channels to let the aircraft fuel flow through and oil flow channels to let the oil flow through, and
in at least each of the oil flow channels stacked, arranged is a flow channel member which defines a flow channel so that the oil flows from the temperature raising section toward the heat exchanging section.

3. The aircraft heat exchanger of claim 2, wherein each of the fuel flow channels stacked is implemented as a U-turn flow channel including a forward path and a backward path,
the fuel flow channel inlet provided for the temperature raising section is adjacent to the fuel flow channel outlet provided for the heat exchanging section, and
the flow channel member for the oil flow channel defines the flow channel so that the oil flows through the temperature raising section in a direction that intersects with the flow direction of the fuel flow channel and that the oil that has passed through the temperature raising section reaches a vicinity of the fuel flow channel outlet.

4. The aircraft heat exchanger of claim 2 or 3, wherein the oil flow channel has a narrower flow channel width in the temperature raising section than in the heat exchanging section.

5. The aircraft heat exchanger of any one of claims 2 to 4, wherein in at least each of the fuel flow channels stacked, arranged are corrugated fins, and
in the fuel flow channel, the corrugated fin arranged in the temperature raising section has a lower heat exchange efficiency than the corrugated fin arranged in the heat exchanging section.

6. The aircraft heat exchanger of claim 1, wherein the heat exchanger body has a shell-and-tube structure including: a cylindrical shell which is configured to define an oil flow channel to let the oil flow through by having its opening at each of both ends closed with an end plate; and a plurality of tubes which define a fuel flow channel to let the aircraft fuel flow through by being arranged inside the shell and by communicating with members outside of the shell via the end plate, and
inside the shell, arranged is a boundary wall member configured to separate the temperature raising section and the heat exchanging section from each other.

7. The aircraft heat exchanger of claim 6, wherein the heat exchanger body with the shell-and-tube structure further has a bypass passage which is provided outside of the shell and which forms part of the oil flow channel by allowing the temperature raising section and the heat exchanging section that are separated from each other by the boundary wall member to communicate with each other.

8. The aircraft heat exchanger of claim 6 or 7, wherein the temperature raising section is arranged between the end plate and the boundary wall member adjacent to the end plate, at least one baffle is arranged between the end plate and the boundary wall member,
the inlet to let the oil enter the shell is arranged closer to the boundary wall member than the baffle is, and the oil that has entered the shell through the inlet flows across the baffle and then runs along an axis of the cylindrical shell toward the end plate.

9. The aircraft heat exchanger of any one of claims 6 to 8, wherein the temperature raising section is arranged between the boundary wall member and the end plate,
tip ends of the tubes that form the aircraft fuel inlet are supported by the end plate that defines the temperature raising section, and
the tip ends of the tubes are embedded in the end plate without running through the end plate.
